# EUROPEAN PATENT APPLICATION

(11) **EP 4 749 548 A1**
(43) Date of publication of application: **27.05.2026**
(21) Application number: 24215196.7
(22) Date of filing: 25.11.2024
(51) Int. Cl.: G06Q 10/101, G06Q 50/18

(54) **COLLABORATIVE CREATION SYSTEM BETWEEN STARS AND FANS**

(71) Applicant: Nam, Ki-Won, Seoul 06159 (KR)
(72) Inventor: Nam, Ki-Won, Seoul 06159 (KR)
(74) Representative: Botti & Ferrari S.p.A.

(57) **Abstract**

The present invention relates to a collaborative creation system between stars and fans, and an object thereof is to provide a collaborative creation system between stars and fans and a method therefor which enable users to perform new communicative creation through the processes of: dividing a display space of a star creative work uploaded by a star creator into a plurality of pieces; and issuing and distributing, as a blockchain-based NFT, information on the star creative work and location information of the pieces on the star creative work, which allows fan creative works to be displayed in each piece on the star creative work.

## Description

### [Technical Field]

The present invention relates to a collaborative creation system between stars and fans, and more specifically, to a collaborative creation system between stars and fans which enable users to perform new communicative creation through the processes of: dividing a display space of a star creative work uploaded by a star creator into a plurality of pieces; and issuing and distributing, as a blockchain-based NFT, information on the star creative work and location information of the pieces on the star creative work, which allows fan creative works to be displayed in each piece on the star creative work.

### [Background Art]

As well known in the art, creative works based on copyright representatively include literary works including novels and poems, artistic works including pure and applied arts, and musical works in which music is record in various types of recording media and distributed so as to be played. In addition thereto, there are various types of creative works.

Pricing of works of art is measured differently depending on the auctioneer, gallery, or consultant who relays each transaction. As a typical price measurement method, there is a method for calculating a price of a work of art by referring to the estimated price thereof and the transaction price of works similar thereto. In general, the more transaction records available for reference, the more transparent transactions become possible.

At this time, the transaction records available for reference include data provided for a fee by international companies such as ARTNET, ARTSY and ARTPRICE, etc. However, since the transaction records provided by the companies are also provided in a spreadsheet such as an Excel file, the accuracy of the data cannot be trusted. Since all the data provided by the data providers are owned themselves and the works of art are sold at high prices, it is difficult for ordinary purchasers to check the transaction record data for the works of art that they want to purchase.

In addition, the safety of data on transaction records and ownership for the works of art cannot be secured, and there is a risk that security problems may be exposed when trading the works of art.

Accordingly, Korean Patent Laid-Open Publication No. 10-2016-0000021 (hereinafter referred to as Patent Document 1) discloses a system for price search of artwork and art market statistical analysis, which analyzes information on the prices and trends of artworks using an analysis software and provides the information to customers, rather than directly writing the prices of artwork and art market statistical analysis by a manager, such that reliability may be increased and manual updates may be minimized, thus to easily manage the related data.

However, in the above-described Patent Document 1, when request information regarding the price of the artwork or art market statistical analysis is received from a customer terminal, artwork information is collected from an artwork auction server based on the request information, and analyzed using a big data analysis technique, and then artwork price information and art market statistical analysis information are generated to transmit them to the customer terminal. In this case, since the customer should directly provide information on the desired artwork, only the artwork information corresponding to the requested information can be checked. Therefore, information on various artworks cannot be easily checked, and the generated price information is also provided without performing a verification process, such that reliability is low.

In addition, Korean Patent Registration No. 10-1867343 (hereinafter referred to as Patent Document 2) discloses an online artwork trading platform and operation method using an online gallery, in which potential purchasers may find various artists or collectors and their artworks through the online gallery, and a user who purchases an artwork may resell the artwork immediately after purchase using the online gallery without any extra effort. As a result, continuous re-trading of a single artwork may be activated.

However, according to the above-described Patent Document 2, the artwork owned by the user can be used for data analysis only when it is provided to the online gallery. In other words, since ownership of the data on the provided artwork is not granted to the user, profits generated when providing information on the artwork cannot be distributed.

Meanwhile, objects based on copyrights may have an asset-based value, thus to be traded with other users. Therefore, in the process of trading the object, a method capable of transferring the object after checking clear ownership thereof is required.

Recently, to this end, techniques or methods capable of verifying or trading ownership information on the object using blockchain-based non-fungible tokens (NFTs) have been proposed.

Meanwhile, a means for a person accessing such the object to check the NFT issued for the object is required. For example, if there is a need to provide a pre-issued blockchain-based NFT for a specific object to people accessing the object, the object should be clearly identified and information on the blockchain-based NFT for the object should be provided to the people. In this regard, a technique of generating a unique code for an object and requesting and verifying the provision of information on the NFT based on the code is known in the art.

Through this technique, for objects that are offline creative works, there are cases where the objects are converted into blockchain-based NFT information as they are and used as virtual works. However, it can be seen that the above-described case may infringe the copyright of an original creator. Therefore, various disputes are currently occurring.

In addition, there is a case where fan creative works that parody offline creative works are converted into blockchain-based NFT information and implemented as virtual works. However, in this case as well, it may become an excuse for a copyright dispute to arise with the original creator. In this case, the following problems may generally occur.

First, when the scope of the original creator's copyright is determined to be too broad, the will of creation for virtual fan creative works may be discouraged, such that an environment in which excellent works can be produced may not be achieved.

Second, when the scope of the original creator's copyright is determined too narrow, the virtual fan creative works may be overused and the purpose of the original copyrighted work may be damaged. In particular, the original copyright holder may not receive profits from NFT coins, which are virtual fan creative works. Up to now, there is no system in which the original copyright holder divides some of the creative rights to virtual fan creators, and the profits resulting from the division are distributed.

Third, following the second problem above, when the original creative work is image rights of a star and a plurality of fans work together with the star on a virtual fan creative work, there is no system in which the profits from NFT coins based on the image rights of the star can be rationally distributed between the star and the plurality of fans, and some creators can transfer the divided ownership to a third party by reflecting the current price of the NFT coin in relation thereto. Therefore, even in recent years when various cultural products about virtual worlds such as the Metaverse, etc. have been released, creative work products are still not actively produced.

### [Summary of Invention]

### [Problems to be Solved by Invention]

In consideration of the above-described circumstances, it is an object of the present invention to provide a blockchain-based fan creative work management system and a method therefor which enable users to perform new communicative creation through the processes of: dividing a display space of a star creative work uploaded by a star creator into a plurality of pieces; and issuing and distributing, as a blockchain-based NFT, information on the star creative work and location information of the pieces on the star creative work, which allows fan creative works to be displayed in each piece on the star creative work.

### [Means for Solving Problems]

To achieve the above object, according to an aspect of the present invention, there is provided a collaborative creation system between stars and fans, the system including a piece creative work management server 10 which includes: a star creative work registration unit 16 configured to register a star creative work permitted by an original creator to display a fan creative work of a fan creator at a specific location on the star creative work; a piece division unit 24 configured to divide a display space on the star creative work into a plurality of pieces so that a plurality of fan creative works are displayed on the star creative work registered in the star creative work registration unit 16; a fan creative work registration unit 18 configured to map the fan creative works of the fan creator with locations of each piece of the star creative work divided through the piece division unit 24 and register them, wherein the fan creator has bought rights to display the fan creative works at the locations; and a token issuance request unit 34 configured to request a generation of a non-fungible token (NFT) consisting of data related to the star creative work and the pieces, and an electronic wallet address on the blockchain using a smart contract.

Preferably, the piece creative work management server 10 further includes: a star creative work storage unit 36 configured to store an original file (1_O_F) of the star creative work permitted by an original creator to display the fan creative work of the fan creator at a specific location on the star creative work; and a fan creative work storage unit 38 configured to map an original file (2_O_F) of the fan creative work registered through the fan creative work registration unit 18 with a location of a piece divided and transferred by the fan creator and store the same.

Preferably, information recorded in blocks through the smart contract comprises at least an address code indicating a storage path of the star creative work, address codes corresponding to the locations occupied by each piece in the star creative work, and transaction history information.

Preferably, the piece creative work management server 10 further includes an object unique information acquisition unit 28 configured to automatically acquire and manage unique information on the object of the creative work to be registered by the original creator in the star creative work registration unit 16, wherein the object unique information is included in information recorded in the blocks through the smart contract.

Preferably, the piece creative work management server 10 further includes a linkage meta information address management unit 32 configured to: receive a registration request signal for meta information in conjunction with the fan creative work from a buyer terminal; register the linkage meta information; and manage the address.

Preferably, the piece creative work management server 10 further includes: a fan creative work posting condition setting unit 26 configured to set a posting condition guide of the fan creative works for the star creative work permitted by the star creator to the fan creator; and a fan creative work condition coincidence determination unit 30 configured to automatically determine whether the creative work of the fan creator coincides with information on the posting condition guide.

Preferably, the piece creative work management server 10 further includes a piece location code management unit 22 configured to manage location information of the pieces included for each non-fungible token (NFT).

Preferably, the piece creative work management server 10 further includes a creative work storage path management unit 20 configured to manage storage path information of the star creative work and fan creative work.

Preferably, the system further includes an NFT transaction processing server 8 which includes: a piece transaction processing unit 44 which processes to trade the pieces divided into the plurality of pieces so that each of the plurality of fan creative works is displayed on the star creative work, in conjunction with the piece creative work management server 10; a piece transfer amount division calculation unit 46 configured to calculate and distribute a transfer amount generated through a transaction of any one piece between the star creator of the star creative work to which the piece belongs and owners of other pieces excluding the owner of the piece that belongs to the star creative work and the transaction has been made as a benefit amount; a piece transaction smart contract information generation unit 48 configured to generate a code to record ownership change information changed due to a transfer of the piece as a code to be recorded in the blockchain; and a piece transaction smart contract information management unit 50 configured to manage information generated through the piece transaction smart contract information generation unit 48.

Preferably, the NFT transaction processing server 8 further includes: a fan creative work posting condition management unit configured to register and manage creator's posting conditions for the fan creative works; and a BIX token payment processing unit 52 configured to perform payment processing of a Blue IndeX (BIX) token, such as payment for verification of the star creative work and verification of piece's ownership information, or payment for takeover of the pieces.

Preferably, the star creative work is visible image data including a pictorial of a star, an image of star's daily life, a movie poster or movie scene data, or broadcast scene data or painting work, or acoustic data displayed as a digital waveform such that each section can be divided.

Preferably, the pieces are distinguished by dividing a size of a single star creative work into a grid frame having a predetermined number of rows and columns.

Preferably, the piece transaction processing unit 44 processes to: register a minimum bid amount in consideration of an amount of the creative work set by the star creator; register the number of pieces to be divided and transferred and a minimum bid amount per unit thereof to perform bid reception from users; and perform successful bid processing for each piece in an order of the highest bid amount.

Preferably, the piece transfer amount division calculation unit 46 processes to calculate so that a calculation ratio for an original creator, which is preset for a transfer amount of any one piece, and a calculation ratio for owners who own other pieces excluding a transferor who transfers the piece, are proportional to an initial bid amount.

### [Brief Description of Drawings]

FIG. 1 is a block diagram illustrating the schematic configuration of a collaborative creation system between stars and fans according to an embodiment of the present invention;
FIGS. 2A to 2G are images illustrating selection and display status of a star creative work and fan creative works which are piece-processed within the star creative work through the collaborative creation system between stars and fans according to an embodiment of the present invention;
FIG. 3 is a block diagram illustrating the configuration of a piece creative work management server included in the collaborative creation system between stars and fans according to an embodiment of the present invention;
FIG. 4 is a block diagram illustrating the configuration of an NFT transaction processing server included in the collaborative creation system between stars and fans according to an embodiment of the present invention; and
FIG. 5 is a flowchart illustrating procedures related to permission and registration processing for fan creative works through the collaborative creation system between stars and fans according to an embodiment of the present invention.

### [Mode for Carrying out Invention]

Hereinafter, the present invention will be described in detail with reference to the accompanying drawings.

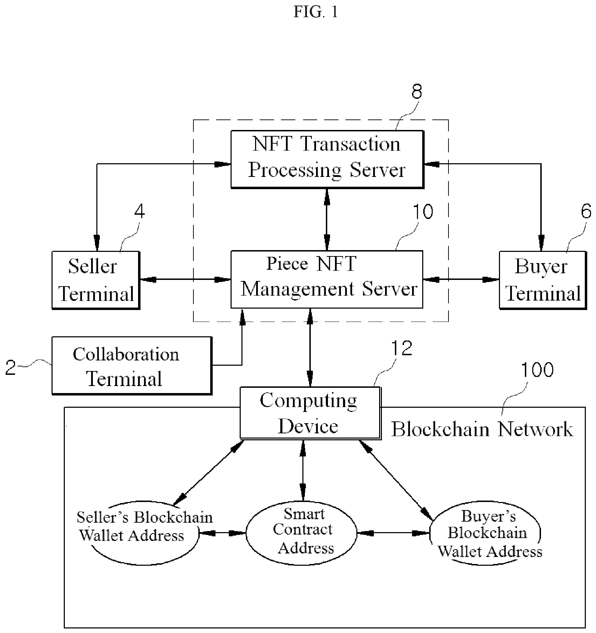

FIG. 1 is a block diagram illustrating the schematic configuration of a collaborative creation system between stars and fans according to an embodiment of the present invention.

Referring to FIG. 1, the collaborative creation system between stars and fans according to an embodiment of the present invention is a collaborative creation system between stars and fans which enables users to perform new communicative creation through the processes of: dividing a display space of a star creative work uploaded by a star creator into a plurality of pieces; and issuing and distributing, as a blockchain-based NFT, information on the star creative work and location information of the pieces on the star creative work, which allows fan creative works to be displayed in each piece on the star creative work.

An increase in the value of a star's creative work, which may be a star creative work, means that: the star's star creative work can be issued as blockchain-based non-fungible tokens (NFTs), thereby making it to have permanency; and in addition thereto, the value may be further increased by forming hash data for location address values of the pieces obtained by dividing the star's star creative work as non-fungible tokens (NFTs), registering fan creative works by a fan who owns the location address of the piece in conjunction with the location of the piece, and supporting so that the creative works can be red on the platform of the present invention, in particular, by implementing the proof of the communication between the star and the fans as a storage value managed in a way that forgery and falsification thereof are impossible.

In addition, the increase in the value of the star's creative work means an increase in the economic value assigned to the star obtained by issuing the star's creative work as the non-fungible tokens (NFTs).

Further, the increase in the value of the star's creative work means that, when the star's creative work is issued as the non-fungible tokens (NFTs), fans participate as purchasers of the pieces included in the star piece NFT implemented through the NFT issuance system of the present invention, such that the investment value of the fans due to an increase in the obtained market value of the NFT is increased.

In more detail, the collaborative creation system between stars and fans according to an embodiment of the present invention includes a piece creative work management server 10 configured to: register a star's star creative work; divides the star creative work into a plurality of grids on an image to generate pieces; request an NFT transaction processing server 8 to package data including hash data for location address values of the divided pieces and mint them as non-fungible tokens (NFTs); register fan creative works to be displayed in conjunction with the location by a fan who owns the location addresses of the pieces; and support so that the creative works can be red on the platform of the present invention.

Here, the present disclosure will be described by distinguishing a collaboration terminal 2 for allowing the star as the star creator, and the fan as the fan creator, to upload the creative works to the piece creative work management server 10, or register and update metadata such as SNS information of the fan creator from seller and buyer terminals that generate signals to sell and buy the non-fungible tokens (NFTs).

The pieces may be distinguished by dividing the display space of a single star creative work into a grid frame having a predetermined number of rows and columns.

In addition, the collaborative creation system between stars and fans according to an embodiment of the present invention includes the NFT transaction processing server 8 configured to generate a smart contract-based NFT through a blockchain network 100 and records it in blocks according to a signal received with a request to package data including hash data for the location address values of the pieces and generate non-fungible tokens (NFTs) in conjunction with the piece creative work management server 10. The NFT transaction processing server 8 receives sell and buy-related signals from a seller terminal 4 and a buyer terminal 6, and performs piece NFT transaction processing according to electronic wallet addresses of each subject.

In addition, the NFT transaction processing server 8 records the smart contract in the blocks through the blockchain network 100.

The blockchain network 100 has a known smart contract configuration for relaying transactions through blockchain addresses or storing NFTs in each node.

The NFT transaction processing server 8 included in the system of the present invention may package information related to the creative works, and map the packaging information with a seller's blockchain wallet address, a buyer's blockchain wallet address and a smart contract address, thereby allowing the transaction parties to perform transaction through the NFT transaction processing server 8, but in reality, safely perform transaction on the blockchain network 100.

Accordingly, the NFT transaction processing server 8 may transmit verification request information for the information of a specific NFT requested from the collaboration terminal 2, the seller terminal 4, or the buyer terminal 6 to the blockchain network 100. If the result acquired from the computing device 12 of the blockchain network 100 is true, the NFT transaction processing server may provide at least one of the NFTs for the objects, information related to the NFTs, and information on the objects to the terminals 2, 4 and 6. On the other hand, if the verification result received from the blockchain network 100 is false, the NFT transaction processing server 8 may not provide the NFTs for the objects, the information related to the NFTs, and the information on the objects to the terminals 2, 4 and 6.

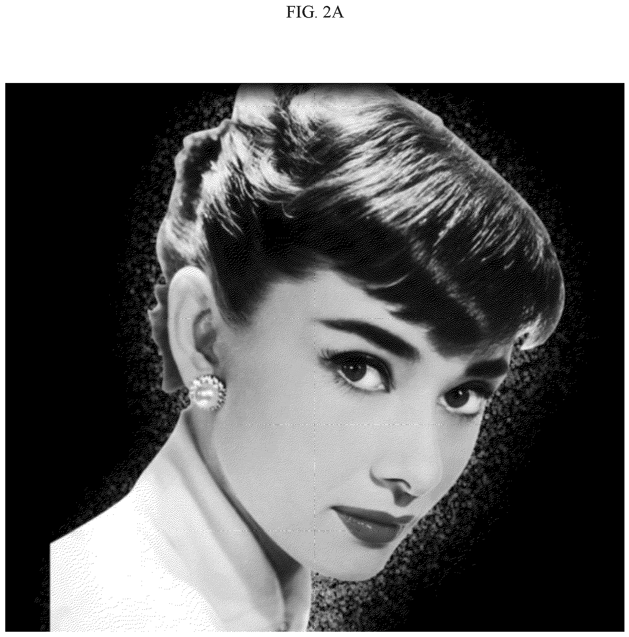

FIGS. 2A to 2G are images illustrating a state in which a star creative work and fan creative works piece-processed within the star creative work are selected and displayed through the collaborative creation system between stars and fans according to an embodiment of the present invention.

Hereinafter, a process of displaying fan creative works from the star creative work, and a process of exposing SNS information in conjunction with fan creative works will be described with reference to FIGS. 2A to 2G.

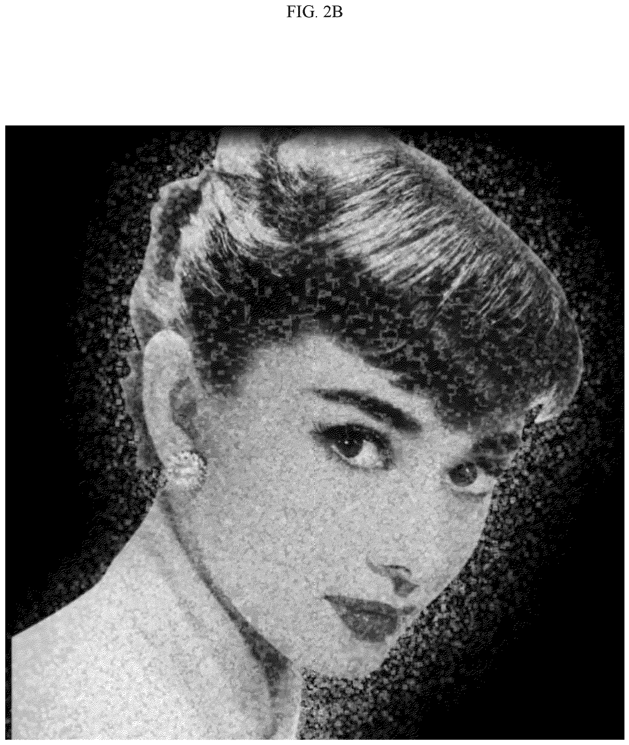

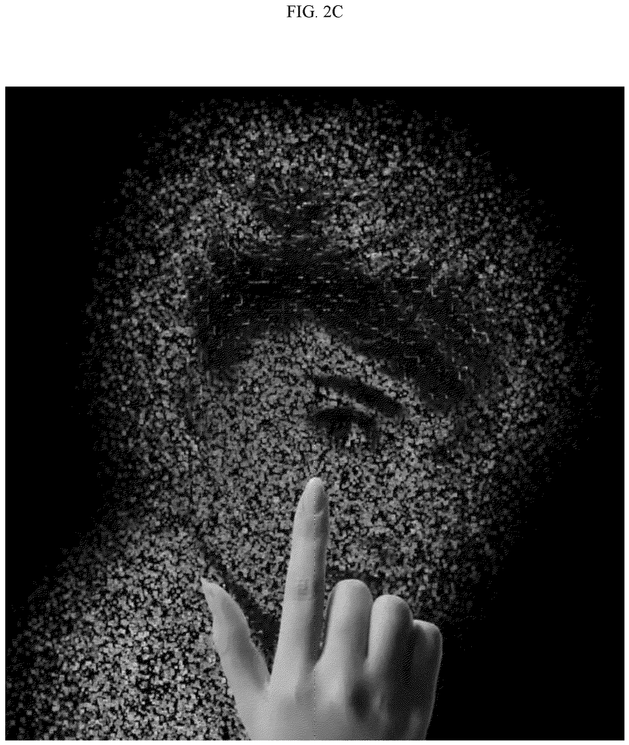

First, a user may output a star creative work as shown in FIG. 2A on a screen of the collaboration terminal 2 through an application installed therein. Then, the screen is converted into a piece display screen where fan creative works are stored as shown in FIG. 2B, thus a screen displaying a plurality of pieces such as a screen shown in FIG. 2C may be output.

The major factor of NFT traded through a smart contract-based multi-creative work management system according to an embodiment of the present invention is location values of the pieces. The buyer who owns the location values may register the fan creative works created by him or her and various meta information through the content platform implemented by the Piece creative work management server 10, and take advantage of the value of the star creative work while distributing the fan creative works and SNS addresses.

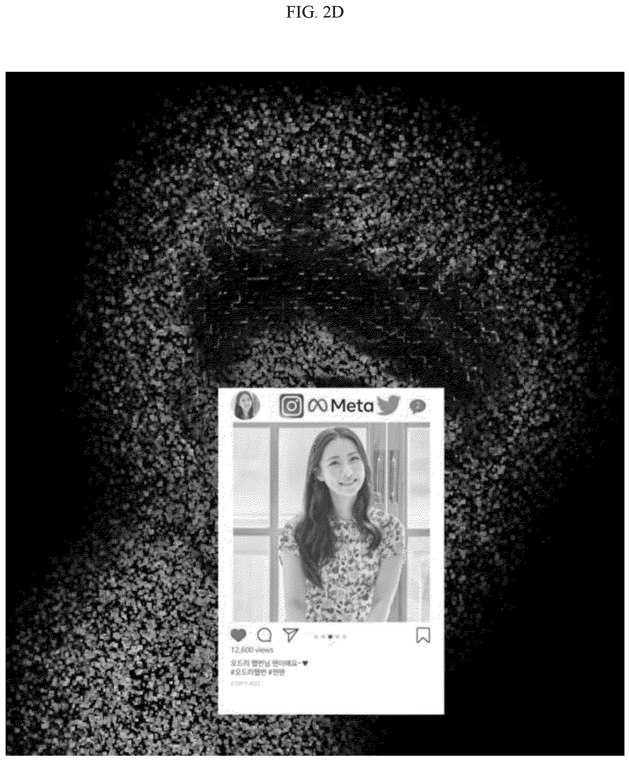

The user may click on the fan creative work stored in any one piece as shown in FIG. 2C. When clicking, as shown in FIG. 2D, SNS information in conjunction with the fan creative work may be displayed.

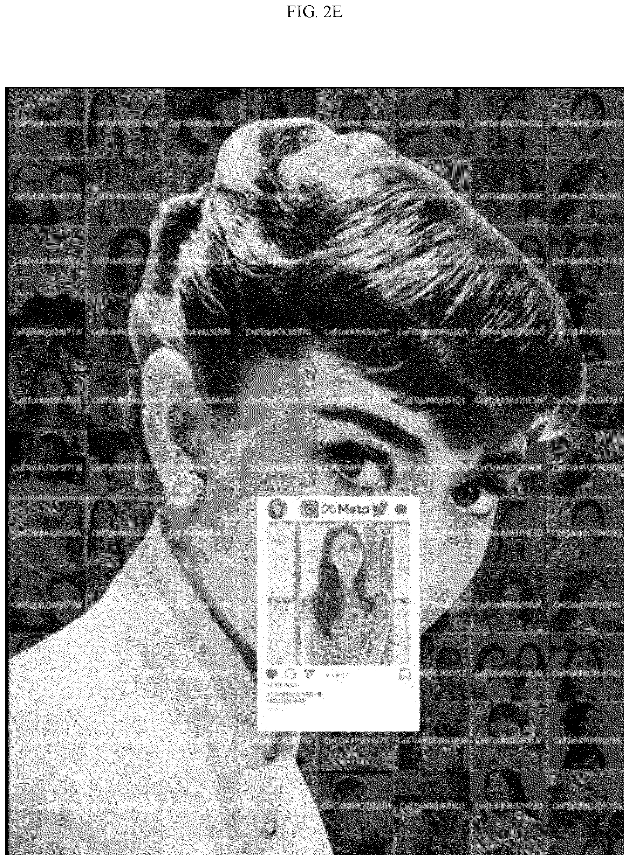

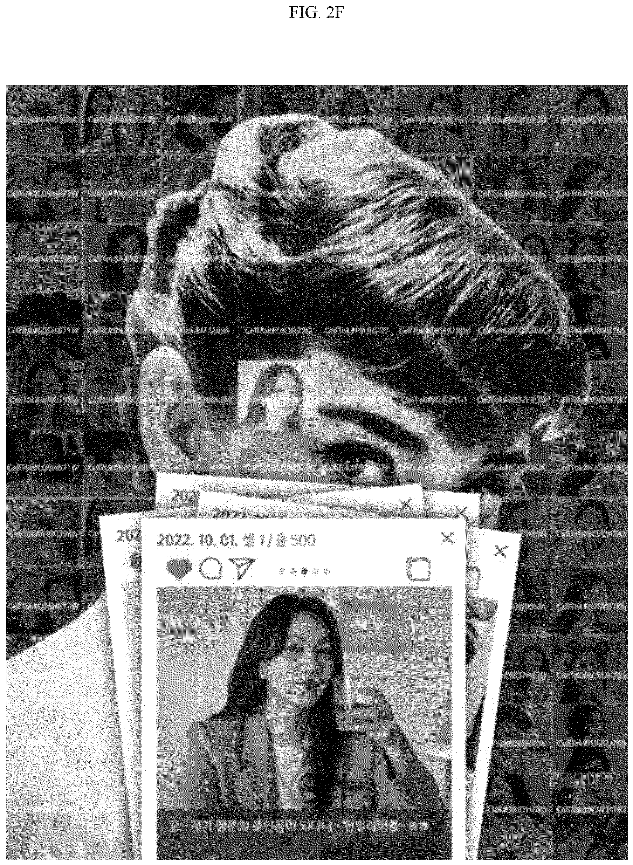

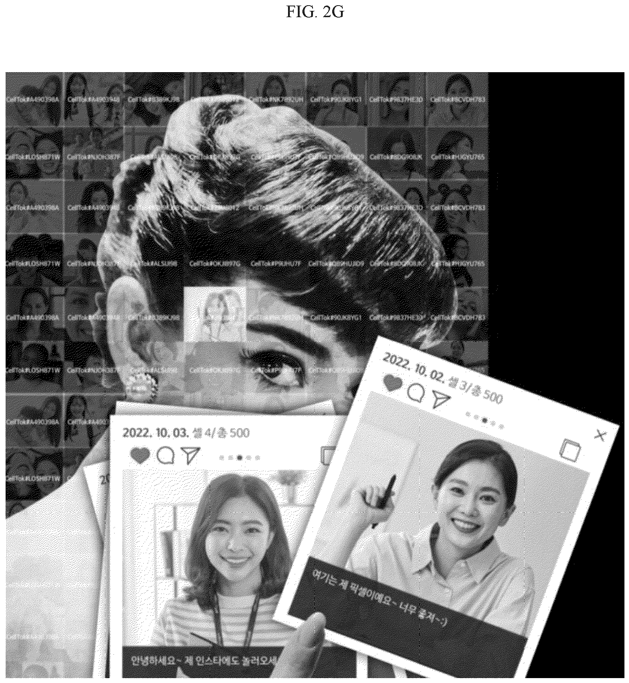

By repeating such processes, the user may repeatedly expose a plurality of SNS screens in conjunction with a plurality of fan creative works, as shown in FIGS. 2E and 2F, and may read the SNS information as exposed in FIG. 2G by scrolling the same.

In other words, different types of data may be inserted according to the enlargement and reduction of an image of a star. In particular, if the user who inserts the fan creative works into the pieces is a fan of the star, there is a secondary effect capable of additionally obtaining significant cohesion and unity in addition to the investment in the creative works.

At this time, the star creative work may be visible image data including a pictorial of a star, an image of star's daily life, a movie poster or movie scene data, or broadcast scene data or painting work, or acoustic data displayed as a digital waveform such that each section can be divided. But, the star creative work is not limited to the data aimed only at the star.

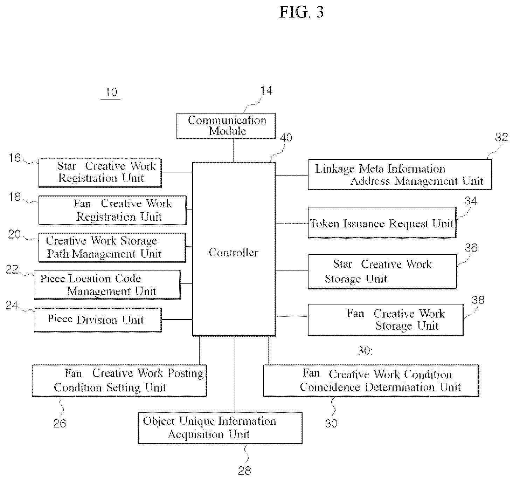

FIG. 3 is a block diagram illustrating the configuration of the piece creative work management server included in the collaborative creation system between stars and fans according to an embodiment of the present invention.

Referring to FIG. 3, the piece creative work management server 10 included in the collaborative creation system between stars and fans according to an embodiment of the present invention includes: a star creative work registration unit 16 configured to register a star creative work permitted by an original creator to display a fan creative work of a fan creator at a specific location on the star creative work;
a piece division unit 24 configured to divide a display space on the star creative work into a plurality of pieces so that a plurality of fan creative works can be displayed on the star creative work registered in the star creative work registration unit 16;
a fan creative work registration unit 18 configured to map the fan creative works of the fan creator with locations of each piece of the star creative work divided through the piece division unit 24 and register them, wherein the fan creator has bought rights to display the fan creative works at the locations; and a token issuance request unit 34 configured to request a generation of a non-fungible token (NFT) consisting of data related to the star creative work and the pieces, and an electronic wallet address on the blockchain using a smart contract.

The star creator who registers the star creative work generates a star creative work in a virtual space, and allows the fan creators to perform secondary creations such as inserting the fan creative works newly created by them into any one piece obtained by spatially dividing the virtual star creative work into the plurality of pieces and displaying the same. Accordingly, when operating the system of the present invention, transactions for secondary creation spaces, that is, pieces, resulting calculation and blockchain-based verification may be performed.

Meanwhile, the piece creative work management server 10 included in the collaborative creation system between stars and fans according to an embodiment of the present invention further includes: a star creative work storage unit 36 configured to store an original file (1_O_F) of the star creative work permitted by an original creator to display the fan creative work of the fan creator at a specific location on the star creative work; and a fan creative work storage unit 38 configured to map an original file (2_O_F) of the fan creative work registered through the fan creative work registration unit 18 with a location of a piece divided and transferred by the fan creator and store the same.

In this case, information recorded in the blocks through the smart contract includes at least an address code indicating a storage path of the star creative work, address codes corresponding to the locations occupied by each piece in the star creative work, and transaction history information.

In addition, the displaying of creative works implemented by a mobile app through the collaborative creation system between stars and fans according to an embodiment of the present invention, and the displaying of mapped linkage information are implemented as shown in FIGS. 2A to 2G. However, a very important value through the non-fungible token (NFT) is the location values of the pieces, and as a result, the present invention issues an independent non-fungible token (NFT) for each piece.

Meanwhile, the piece creative work management server 10 further includes an object unique information acquisition unit 28 configured to automatically acquire and manage unique information on the object of the creative work to be registered by the original creator in the star creative work registration unit 16. In the collaborative creation system between stars and fans, the object unique information may be included in the information recorded in the blocks through the smart contract.

At this time, when the object is a photograph, the object unique information may be a unique code generated by reflecting color of the photograph, direction of contrast (direction of light), a resolution of the photograph, and shape recognition information (digital conversion value) in the photograph, and it is configured so that the generated unique code is stored in the database by matching it with the object.

In addition, through the present invention, it is possible to issue blockchain-based NFTs consisting of the unique codes, and when a verification request signal for the object is received later, NFT verification may be performed through the blockchain verification technique and the object unique information.

Users may freely register the original file (2_O_F) of the fan creative work prepared by them to be mapped with the location values of the pieces owned by them, and register metadata such as an SNS access path.

To this end, the piece creative work management server 10 further includes a linkage meta information address management unit 32 configured to: receive a registration request signal for meta information in conjunction with the fan creative work from the buyer terminal; register the linkage meta information; and manage the address.

In addition, the piece creative work management server 10 further includes: a fan creative work posting condition setting unit 26 configured to set a posting condition guide of the fan creative works for the star creative work permitted by the star creator to the fan creator; and a fan creative work condition coincidence determination unit 30 configured to automatically determine whether the creative work of the fan creator coincides with information on the posting condition guide.

At this time, when the object is a photograph for example, the fan creative work guide information may be information that limits the resolution, contrast, or color of the photograph that can be inserted into the pieces reflecting location information. When the fan creator inserts his or her own photograph into a bought piece, it is possible to recognize whether the photograph is the corresponding photograph based on the fan creative work guide information.

On the other hand, conditions for the star creator may be separately set, which is a configuration that allows the star creator to set his or her own conditions, unlike limiting the posting conditions systematically or by the color or contrast ratio.

Meanwhile, the piece creative work management server 10 further includes a piece location code management unit 22 configured to manage the location information of the pieces included for each non-fungible token (NFT). The piece location code management unit 22 separately manages the location occupied by each piece on the star creative work along with the NFT code, and manages it in conjunction with the fan creative work and meta information.

In addition, the piece creative work management server 10 further includes a creative work storage path management unit 20 configured to manage storage path information of the star creative work and fan creative work. If a size of the data exceeds a predetermined standard size, the star creative work and fan creative work are stored outside the blockchain network, that is, in the piece creative work management server 10, which is an external storage unit, without being packaged as NFT. Therefore, the storage path for the creative works should be managed separately.

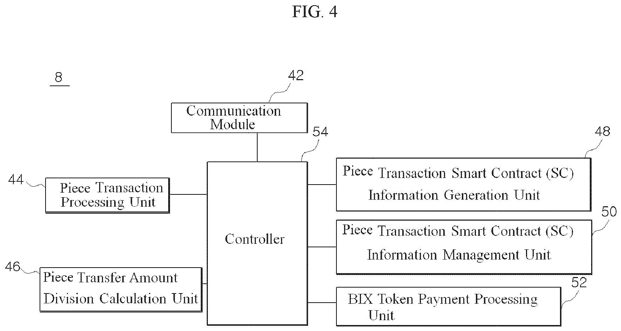

FIG. 4 is a block diagram illustrating the configuration of the NFT transaction processing server included in the collaborative creation system between stars and fans according to an embodiment of the present invention.

Referring to FIG. 4, the NFT transaction processing server 8 included in the collaborative creation system between stars and fans according to an embodiment of the present invention includes: a piece transaction processing unit 44 which processes to trade the pieces divided into the plurality of pieces so that each of the plurality of fan creative works can be displayed on the star creative work in conjunction with the piece creative work management server 10; and a piece transfer amount division calculation unit 46 configured to calculate and distribute a transfer amount generated through a transaction of any one piece between the star creator of the star creative work to which the piece belongs and owners of other pieces excluding the owner of the piece that belongs to the star creative work and the transaction has been made as a benefit amount.

In addition, the NFT transaction processing server 8 includes: a piece transaction smart contract information generation unit 48 configured to generate a code to record ownership change information changed due to a transfer of the piece as a code to be recorded in the blockchain; and a piece transaction smart contract information management unit 50 configured to manage information generated through the piece transaction smart contract information generation unit 48.

At this time, the piece transaction processing unit 44 serves to transfer a right to display the fan creative works in a region of the pieces formed by dividing the display space of any one star creative work into a plurality of fan creators. Precisely, this refers to a space divided from data limited to the virtually distributed creative works.

For example, when the photograph of a star is the star creative work, the star becomes the star creator. At this time, the right transferred to the fan creator is the right to display the fan creative works made up of fans' photographs in duplicate at specific locations of the star creative work such as a photograph of the star.

The photograph of the star is divided into spaces like a mosaic, and the fan creative works may be inserted into each divided piece. Fans of the star may buy a secondary creative space in the photograph of the star and insert their own photographs therein to create a mosaic-like work. Therefore, the fans of the star will be active buyers for the pieces.

In addition, through the above-described process, the fan creative works inserted by a plurality of users into the plurality of pieces are ultimately created as completely new fan creative works through activities like the collaborative work, which have greater value than the star creative work such as the photograph of the star simply held by the fans.

In particular, if one of the star's best friends or the star's lover buys a piece in the star's creative work, and inserts a fan creative work therein, its value may be further increased.

At this time, the piece transaction processing unit 44 processes to: register a minimum bid amount in consideration of an amount of the creative work set by the original copyright holder; register a minimum bid amount per unit of each secondary creative space to be divided and transferred to perform bid reception form the user; and perform successful bid processing for the secondary creative space for each location in an order of the highest bid amount.

Meanwhile, the NFT transaction processing server 8 further includes: a fan creative work posting condition management unit (now shown) configured to register and manage creator's posting conditions for the fan creative works; and a BIX token payment processing unit 52 configured to perform payment processing of a Blue IndeX (BIX) token, such as payment for verification of the star creative work and verification of piece's ownership information, or payment for takeover of the pieces.

Meanwhile, the piece transaction processing unit 44 processes to: register a minimum bid amount in consideration of an amount of the creative work set by the star creator; register the number of pieces to be divided and transferred and a minimum bid amount per unit thereof to perform bid reception from users; and perform successful bid processing for each piece in an order of the highest bid amount.

In addition, the piece transfer amount division calculation unit 46 processes to calculate so that a calculation ratio for the star creator, which is preset for a transfer amount of any one piece, and a calculation ratio for owners who own other pieces excluding the transferor who transfers the piece, are proportional to an initial bid amount.

At this time, it is processed so that a fan creator who bought the piece at a high price receives a higher amount of calculation (e.g., the same concept as a dividend) than other fan creators who bought the piece at a low price during transactions of other pieces.

In addition, it is clear that the successful bid amounts for a plurality of secondary creative spaces will be different depending on their locations. Further, the system of the present invention includes a controller 54 configured to control the signal flow of each component unit through a communication module 42 for performing wired or wireless communication.

Next, functions and operations of the collaborative creation system between stars and fans and method according to an embodiment of the present invention having the above-described configuration will be described in detail with reference to the accompanying drawings.

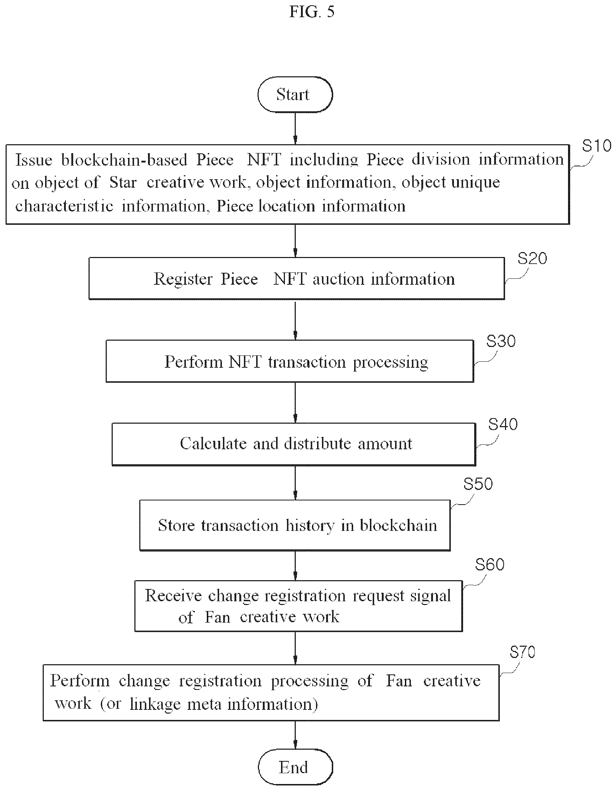

FIG. 5 is a flowchart illustrating procedures related to permission and registration processing for the fan creative works through the collaborative creation system between stars and fans according to an embodiment of the present invention.

First, through the collaborative creation system between stars and fans according to an embodiment of the present invention, the piece creative work management server 10 receives token issuance request information including original data of the star creative work and the number of pieces generated by dividing the original data from the collaboration terminal 2 of the star creator.

At this time, the determination on the original data of the star creative work and the number of pieces generated by dividing the original data is carried out by the star creator, but the star creator may delegate the authority to the piece creative work management server 10.

When the star creative work file is received, the piece creative work management server 10 analyzes the original data (1_O_F) of the star creative work, and registers object information and object unique characteristic information.

In this case, the piece creative work management server 10 may include, as parameters to be included in the NFT, the storage path address of the star creative work and the location codes on the star creative work of the pieces formed by dividing the star creative work, in which the fan creative works are stored.

In addition, when registering the star creative work, the star creator may set conditions for the minimum profit generated through the sale of pieces formed by dividing the star creative work, and register limiting conditions on the data that can be inserted into the pieces by setting.

When the star creative work is registered, the piece creative work management server 10 divides the registered star creative work into a plurality of pieces, and transmits the NFT-containing data to the NFT transaction processing server 8 to issue NFTs.

Then, the NFT transaction processing server 8 registers auction information on the plurality of divided pieces. In this case, auction processing is performed in a way that the bid amounts and the successful bid amounts are different depending on the location of the pieces on the star creative work for the plurality of pieces formed by spatially dividing the star creative work into a grid frame.

At this time, when dividing the star creative work into the grid frame, the number of bidders and the bid amount vary depending on the location of each piece, such that the successful bid amount also varies depending on the location of each piece.

When the auction processing is performed for each piece in the NFT transaction processing server 8, a change in the owner of each piece also occurs. This also issues a smart contract that constitutes new original data reflecting the varied information by requesting the computing device 12 on the blockchain network 100.

A user who buys the pieces as described above may insert the fan creative work created or own by him or her into the pieces to be displayed. As a result, the piece creative work management server 10 may receive the creative work of the fan creator and register it in the divided pieces.

Meanwhile, when a third user wishes to perform verification of the above-described registration step or registered information, he or she may request to perform blockchain verification for the star creative work and blockchain verification for the pieces. By paying a predetermined amount of coins by the NFT transaction processing server 8, information registration or verification may be performed.

In addition, if the current status of the fan creative work does not coincide with the conditions registered by the star creator, the piece creative work management server 10 processes so as not to register the fan creative work in the piece.

In addition, the NFT transaction processing server 8 may perform division payment processing according to the calculation ratio for the star creator, which is preset for a transfer amount of any one piece, and the calculation ratio for owners who own other pieces excluding the transferor who transfers the piece.

Preferably, the division payment processing according to the calculation ratio for owners who own other pieces in the same star creative work excluding the transferor who transfers the piece may be additionally calculated in proportion to an initial bid amount.

In other words, the fan creator who buys the piece at a high price may receive a higher amount of calculation (e.g., the same concept as the dividend) than other fan creators who buy the piece at a low price.

Meanwhile, the collaborative creation system between stars and fans according to the embodiment of the present invention are not limited to the above-described embodiments, but may be variously modified without departing from the technical gist of the present invention.

### [Description of Reference Numerals]

2: collaboration terminal
4: Seller terminal
6: Buyer terminal
8: NFT transaction processing server
10: Piece creative work management server
12: Computing device
100: Blockchain network.

## Claims

1. A collaborative creation system between stars and fans, the system comprising a piece creative work management server 10 which comprises:
a star creative work registration unit 16 configured to register a star creative work permitted by an original creator to display a fan creative work of a fan creator at a specific location on the star creative work;
a piece division unit 24 configured to divide a display space on the star creative work into a plurality of pieces so that a plurality of fan creative works are displayed on the star creative work registered in the star creative work registration unit 16;
a fan creative work registration unit 18 configured to map the fan creative works of the fan creator with locations of each piece of the star creative work divided through the piece division unit 24 and register them, wherein the fan creator has bought rights to display the fan creative works at the locations; and
a token issuance request unit 34 configured to request a generation of a non-fungible token (NFT) consisting of data related to the star creative work and the pieces, and an electronic wallet address on the blockchain using a smart contract.

2. The system according to claim 1, wherein the piece creative work management server 10 further comprises: a star creative work storage unit 36 configured to store an original file (1_O_F) of the star creative work permitted by an original creator to display the fan creative work of the fan creator at a specific location on the star creative work; and
a fan creative work storage unit 38 configured to map an original file (2_O_F) of the fan creative work registered through the fan creative work registration unit 18 with a location of a piece divided and transferred by the fan creator and store the same.

3. The system according to claim 1, wherein information recorded in blocks through the smart contract comprises at least an address code indicating a storage path of the star creative work, address codes corresponding to the locations occupied by each piece in the star creative work, and transaction history information.

4. The system according to claim 1, wherein the piece creative work management server 10 further comprises an object unique information acquisition unit 28 configured to automatically acquire and manage unique information on the object of the creative work to be registered by the original creator in the star creative work registration unit 16, wherein the object unique information is included in information recorded in the blocks through the smart contract.

5. The system according to claim 1, wherein the piece creative work management server 10 further comprises a linkage meta information address management unit 32 configured to: receive a registration request signal for meta information in conjunction with the fan creative work from a buyer terminal; register the linkage meta information; and manage the address.

6. The system according to claim 1, wherein the piece creative work management server 10 further comprises: a fan creative work posting condition setting unit 26 configured to set a posting condition guide of the fan creative works for the star creative work permitted by the star creator to the fan creator; and
a fan creative work condition coincidence determination unit 30 configured to automatically determine whether the creative work of the fan creator coincides with information on the posting condition guide.

7. The system according to claim 1, wherein the piece creative work management server 10 further comprises a piece location code management unit 22 configured to manage location information of the pieces included for each non-fungible token (NFT).

8. The system according to claim 1, wherein the piece creative work management server 10 further comprises a creative work storage path management unit 20 configured to manage storage path information of the star creative work and fan creative work.

9. The system according to claim 1, further comprising an NFT transaction processing server 8 which comprises:
a piece transaction processing unit 44 which processes to trade the pieces divided into the plurality of pieces so that each of the plurality of fan creative works is displayed on the star creative work, in conjunction with the piece creative work management server 10;
a piece transfer amount division calculation unit 46 configured to calculate and distribute a transfer amount generated through a transaction of any one piece between the star creator of the star creative work to which the piece belongs and owners of other pieces excluding the owner of the piece that belongs to the star creative work and the transaction has been made as a benefit amount;
a piece transaction smart contract information generation unit 48 configured to generate a code to record ownership change information changed due to a transfer of the piece as a code to be recorded in the blockchain; and
a piece transaction smart contract information management unit 50 configured to manage information generated through the piece transaction smart contract information generation unit 48.

10. The system according to claim 9, wherein the NFT transaction processing server 8 further comprises: a fan creative work posting condition management unit configured to register and manage creator's posting conditions for the fan creative works; and
a BIX token payment processing unit 52 configured to perform payment processing of a Blue IndeX (BIX) token, such as payment for verification of the star creative work and verification of piece's ownership information, or payment for takeover of the pieces.

11. The system according to claim 1, wherein the star creative work is visible image data including a pictorial of a star, an image of star's daily life, a movie poster or movie scene data, or broadcast scene data or painting work, or acoustic data displayed as a digital waveform such that each section can be divided.

12. The system according to claim 1, wherein the pieces are distinguished by dividing a size of a single star creative work into a grid frame having a predetermined number of rows and columns.

13. The system according to claim 9, wherein the piece transaction processing unit 44 processes to: register a minimum bid amount in consideration of an amount of the creative work set by the star creator; register the number of pieces to be divided and transferred and a minimum bid amount per unit thereof to perform bid reception from users; and perform successful bid processing for each piece in an order of the highest bid amount.

14. The system according to claim 9, wherein the piece transfer amount division calculation unit 46 processes to calculate so that a calculation ratio for an original creator, which is preset for a transfer amount of any one piece, and a calculation ratio for owners who own other pieces excluding a transferor who transfers the piece, are proportional to an initial bid amount.
